# EUROPÄISCHE PATENTSCHRIFT

(11) **EP 1 001 596 B1**
(45) Veröffentlichungstag und Bekanntmachung des Hinweises auf die Patenterteilung: **02.10.2013**
(21) Anmeldenummer: 99122764.6
(22) Anmeldetag: 16.11.1999
(51) Int. Cl.: H04M 7/00, H04M 3/56

(54) **Multimedia-Endgerät für Telefonie zum Ermöglichen von Multipunktverbindungen**
Multimedia terminal for telephony enabling multipoint connections
Terminal multimédia de téléphonie permettant des connexions multipointes

(30) Priorität: 16.11.1998 DE 19852782; 21.12.1998 DE 19859145
(43) Veröffentlichungstag der Anmeldung: 17.05.2000
(73) Patentinhaber: Siemens Enterprise Communications GmbH & Co. KG, 81379 München (DE)
(72) Erfinder: Klaghofer, Karl, 81373 München (DE); Korpi, Markku, 82319 Starnberg (DE); Remmele, Werner, 86415 Mering (DE)
(74) Vertreter: Fritzsche, Thomas

(56) Entgegenhaltungen:
- EP-A- 0 805 576
- THOM G A: "H. 323: THE MULTIMEDIA COMMUNICATIONS STANDARD FOR LOCAL AREA NETWORKS" IEEE COMMUNICATIONS MAGAZINE, IEEE SERVICE CENTER. PISCATAWAY, N.J, US, Bd. 34, Nr. 12, 1. Dezember 1996 (1996-12-01), Seiten 52-56, XP000636454 ISSN: 0163-6804
- CLARK W J: "PROTOCOLS FOR MULTIMEDIA CONFERENCING - AN INTRODUCTION TO THE ITU-T T.120 SERIES" MULTIMEDIA TRANSPORT AND TELESERVICES. INTERNATIONAL COST 237 WORKSHOPPROCEEDINGS. VIENNA, NOV. 13 - 15, 1994, INTERNATIONAL COST 237 WORKSHOP PROCEEDINGS, BERLIN, SPRINGER, DE, 13. November 1994 (1994-11-13), Seiten 322-333, XP000585309 ISBN: 3-540-58759-4

## Beschreibung

Die Erfindung betrifft ein Multimedia-Endgerät für Telefonie gemäß dem Standard ITU-T H.323 zum Ermöglichen von Multipunktverbindungen zu mehreren anderen Endgeräten.

Multipunktverbindungen zwischen mehreren Teilnehmern eines Kommunikationsnetzes sind als Konferenzschaltungen bekannt, die von einer zentralen, im Kommunikationsnetz vorgesehenen Konferenzschaltungssteuerung gesteuert werden. In diesem Zusammenhang sind beispielsweise in einem Kommunikationsnetz vorgesehene Multipunktsteuereinheiten bekannt, sogenannte Multipoint-Control-Units MCU. Bei einer Multipunktverbindung unter Verwendung solcher Multipunktsteuereinheiten haben Endgeräte jeweils eine Punkt-zu-Punkt-Verbindung zur Multipunktsteuereinheit. Diese Multipunktsteuereinheit führt eine Multipunktfunktion aus, die Multipoint-Processing genannt wird. Dabei werden die Datenströme der einzelnen Punkt-zu-Punkt-Verbindungen behandelt, wobei andere die von den einzelnen Endgeräten kommenden Datenströme zusammengemischt werden und das jeweils entstehende Gemisch zu den einzelnen Endgeräten übertragen wird. Eine solche Vorgehensweise ist beispielsweise in dem Standard ITU-T H.323, Klausel 6.8.1, unter der Bezeichnung "Centralized conference" beschrieben.

Es ist auch eine Multipunktkommunikation mit dezentraler Steuerung bekannt, bei der eine Multipunktsteuerung nur für das Abarbeiten einer Multipunktsignalisierung vorgesehen ist. Eine solche dezentrale Multipunktsteuerung kann beispielsweise in einem Endgerät oder einer Multipunktsteuereinheit realisiert sein. Bei dieser Multipunktkommunikation sendet jedes der beteiligen Endgeräte die Nutzinformation an eine von der Multipunktsteuerung vorgegebene Multicastadresse, wobei die Multipunktsteuerung mehrere unterschiedliche Multicastadressen vergibt und jedem Endgeräte eine Multicastadresse für seine zu sendende Information mitteilt. Jedes Endgerät sendet somit an eine spezielle Multicastadresse und empfängt die an die übrigen, von der Multipunktsteuerung vergebenen Multicastadressen gesandte Information. Hierzu müssen alle beteiligten Endgeräte Multicastfunktionen unterstützen. Alternativ zu der Verwendung von Multicast kann auch Multi-Unicast vorgesehen sein. Bei diesem Multi-Unicast-Verfahren senden die Endgeräte die zu übertragenden Datenströme jeweils zu den übrigen an der Multipunktverbindung beteiligten Endgeräten unter Verwendung mehrfacher Punkt-zu-Punkt-Verbindungen.

Ein solches Kommunikationsprinzip ist beispielsweise in dem Standard ITU-T H.323, in Klausel 6.8.2, unter der Bezeichnung "Decentralized conference" beschrieben. Um eine Multipunktkommunikation mit dezentraler Steuerung gemäß diesem Standard ausgehend von einem bestehenden Ruf zwischen einem ersten Teilnehmer A und einem zweiten Teilnehmer B einzurichten, müssen folgende Bedingungen erfüllt sein:
- Mindestens einer der Teilnehmer A und B muß ein Endgerät mit Multipunktsteuerung haben, oder ein zur Verfügung stehender Gatekeeper muß eine Multipunktsteuerung haben.
- Alle beteiligten Endgeräte müssen Multicastfunktionalität oder Multi-Unicastfunktionalität unterstützen.

Ein Gatekeeper ist eine logische Funktion zum Erfüllen von Standardfunktionen wie Adreßauflösung oder Bandbreitenverwaltung. Adreßauflösung bedeutet hierbei, daß ein rufender Endpunkt an den Gatekeeper eine Alias-Adresse eines zu rufenden Endpunktes sendet und vom Gatekeeper die Transportadresse, also die Internetprotokolladresse und die Port-Nummer erhält. Der Gatekeeper kennt das Verkehrsaufkommen bezüglich Echtzeitanwendungen innerhalb des Netzbereiches, für den er zuständig ist.

Darüber hinaus muß der Teilnehmer A bzw. B, der während des Bestehens eines Rufs zwischen den Teilnehmern A und B einen Konsultationsruf zu einem weiteren Teilnehmer C veranlaßt, üblicherweise bereits beim Aufbau dieses Konsultationsrufs festlegen, ob der zu konsultierende Teilnehmer C in den Ruf zwischen den Teilnehmern A und B mit einer Multipunktverbindung eingebunden werden soll.

Die vorstehend beschriebenen Arten, einen zentral gesteuerten oder einen dezentral gesteuerten Multipunktverbindungsaufbau durchzuführen, ermöglichen ausgehend von einem Zwei-Teilnehmer-Ruf mit Konsultationsruf keinen flexiblen Aufbau einer Drei-Teilnehmer-Konferenz.

Aus Thom G. A., "H. 323: The Multimedia Communications Standard for Local Area Networks", IEEE Communications Magazine, IEEE Service Center. Piscataway, N.J., US, Bd.34, Nr.12, Dez. 1996, S. 52-56, ISSN: 0163-6804 ist ein H.323-Konferenzsystem bekannt zur Steuerung einer Konferenzsignalisierung und zum Mischen und Verteilen der Datenströme der Konferenzteilnehmer. Dabei werden zwei Typen offenbart. Beim sogenannten zentralen Konferenztyp wird eine zentrale Konferenzsteuerungseinrichtung (MCU: Multipoint Control Unit) eingesetzt. Hierbei sind die Zugriffsmöglichkeiten der dort vorgesehenen Endgeräte auf die MCU auf die gemäß H.323-Empfehlung vorgesehenen Steuerprotokolle beschränkt. Bei einer dezentralen Konferenzvariante überträgt jedes an der Konferenz beteiligte Endgerät die von ihm selbst stammenden Medienströme per Multicast an alle anderen Konferenzteilnehmer. Bei letztgenannter Konferenzvariante ist keine Mischeinrichtung zur Mischung der zu sendenden Medienströme erforderlich.

Ein aus der EP 0805576 A2 offenbartes Konferenzsystem weist ebenfalls zentrale und dezentrale Konferenz-Mischeinrichtungen auf. Dabei weisen beteiligte Endgeräte eine Replikations- und Kombinationsfunktion auf, wobei durch die Kombinationsfunktion eines jeweils betrachteten Endgeräts die von den jeweils anderen dieser Endgeräte stammenden Datenströme gemischt werden, um das Mischungsergebnis für das betrachtete Endgeräte zu nutzen. An die anderen Endgeräte wird dann nicht das Mischungsergebnis, sondern der ungemischte eigene Datenstrom des betrachteten Endgeräts übertragen.

Aufgabe der vorliegenden Erfindung ist es, einen flexiblen Aufbau einer Multipunktkommunikation zwischen Endgeräten zu ermöglichen.

Diese Aufgabe wird erfindungsgemäß gelöst durch ein neues Multimedia-Endgerät nach Anspruch 1 für Telefonie gemäß dem Standard ITU-T H.323 zum Realisieren von Multipunktverbindungen zu einem ersten anderen Endgerät und einem zweiten anderenEndgerät ausgehend von einer aktiven Verbindung zu dem ersten Endgerät. Ein solches Endgerät hat eine Steuerung zum Abarbeiten einer Signalisierung für Punkt-zu-Multipunkt-Verbindungen. Außerdem enthält es eine Einrichtung zum Mischen von Datenströmen, die vom Multimedia-Endgerät und von den anderen an der Multipunktverbindung beteiligten Endgeräten stammen, und zum Bereitstellen eines daraus resultierenden Gemisches aus diesen Datenströmen an diese Endgeräte. Das Multimedia-Endgerät ist des Weiteren ausgestaltet zum Versetzen des ersten Endgeräts in einen Haltenzustand, zum Aufbauen einer Konsultationsverbindung zu dem zweiten Endgerät in Form logischer Kanäle und zum Zurückversetzen des ersten Endgerätes in den Aktivzustand und Weiterverwenden der bereits geöffneten logischen Kanäle.

Die Steuerung zum Abarbeiten einer Signalisierung für Punkt-zu-Multipunkt-Verbindungen ermöglicht den Aufbau von Punkt-zu-Punkt-Verbindungen zu mehreren anderen Endgeräten gleichzeitig. Darüber hinaus ermöglicht diese Steuerung das Einrichten einer Punkt-zu-Multipunkt-Verbindungskonstellation, die mit Hilfe der Einrichtung zum Mischen von Datenströmen, die von den an der Multipunkt-Verbindung beteiligten Endgeräten stammen, und zum Bereitstellen von Datenstromgemischen an diese Endgeräte, für alle beteiligten Endgeräte wird eine Multipunkt-zu-Multipunkt-Verbindung wirkt

Da die Einrichtung zum Mischen für jedes der an der Multipunktverbindung beteiligten Endgeräte ein Datenstromgemisch der von den übrigen an der Multipunktverbindung beteiligten Endgeräten stammenden Datenströme bereitstellt, wird sichergestellt, daß jedes der an einer Multipunkt-Verbindung beteiligten Endgeräte die Informationen von allen übrigen Endgeräten empfängt.

Der Aufbau von Punkt-zu-Punkt-Verbindungen kann beispielsweise mit Hilfe der regulären Setup-Meldung gemäß ITU-T H.323 erfolgen. Wenn bereits eine oder mehrere Punkt-zu-Punkt-Verbindungen zwischen einem erfindungsgemäßen Endgerät und fernen Endpunkten bestehen, können diese Verbindungen vor dem Einrichten einer neuen Punkt-zu-Punkt-Verbindung mit Hilfe einer Meldung "Nah-End-Halten" (near end hold) oder "Fern-End-Halten" (Far-End-Hold) gemäß der Draft-Recommendation ITU-T H.450.4 in den Zustand "Halten" versetzt werden. Die Punkt-zu-Punkt-Verbindung zu einem weiteren Endgerät kann daraufhin beispielsweise unter Verwendung einer üblichen Setup-Meldung gemäß ITU-T H.323 erfolgen. Beim Einrichten einer Konferenzverbindung zwischen allen Endgeräten, zu denen Punkt-zu-Punkt-Verbindungen bestehen, übermittelt die Steuerung des erfindungsgemäßen Multimedia-Endgeräts beispielsweise eine Leistungsmerkmalmeldung (facility message) "ConferenceIndication.Invoke" mit der Aufforderung, eine bestehende Konferenzschaltung anzuzeigen.

In einer besonderen Ausgestaltungsform eines erfindungsgemäßen Endgeräts kann diese Steuerung auch Steuerkanalmeldungen vom Typ "MultipointConference" oder "CommunicationModeCommand" gemäß dem Standard ITU-T H.242 (siehe Appendix I von ITU-T H.323V2) ausgeben.

Die Meldung "CommunicationModeCommand" kann beispielsweise ausgegeben werden, um einen fernen Endpunkt, zu dem eine Punkt-zu-Punkt-Verbindung besteht, zu veranlassen, einen Übertragungskanal zu schließen und einen anderen Übertragungskanal zu öffnen. Ein Grund hierfür könnte sein, daß eine Ausgestaltungsform eines erfindungsgemäßen Multimedia-Endgeräts nicht in der Lage ist, die Ausgangssignale unterschiedlicher Audio-Codecs zu mischen. Falls nun einer der Teilnehmer einer beabsichtigten Konferenzschaltung nur ein Codec gemäß ITU-T G.711 zur Verfügung hat, kann ein anderer Teilnehmer aufgefordert werden, einen Übertragungskanal für gemäß ITU-T G.723.1 codierte Daten zu schließen und zu einem anderen Übertragungskanal für gemäß ITU-T G.711 codierte Daten zu wechseln.

Ein anderer Grund zum Abgeben einer Meldung "CommunicationModeCommand" kann sein, daß die Endpunkte einer geplanten Konferenzschaltung multicastingfähig sind. In diesem Fall kann die Meldung "CommunicationModeCommand" die Multicast-Adressen enthalten, an die die Endpunkte ihre Nutzinformation senden sollen. Bei dieser Abwendung müßten die Endgeräte an allen Endpunkten die Fähigkeit besitzen, die Datenströme zu empfangen und zu mischen, bevor sie sie an den entsprechenden Teilnehmer weitergeben. Die Mischeinrichtung des erfindungsgemäßen Endgeräts würde keine Datenstromgemische für die übrigen Endpunkte bereitstellen.

Auch falls das erfindungsgemäße Endgerät die Datenströme von unterschiedlichen Endpunkten über unterschiedliche Adressen empfangen möchte, kann zum Einrichten einer Konferenzschaltung das Ändern einer bestehenden Verbindung mit Hilfe der genannten Meldung "CommunicationModeCommand" veranlaßt werden. Auch hierbei würde dem Endpunkt, zu dem eine Punkt-zu-Punkt-Verbindung besteht, mit Hilfe der Meldung "CommunicationModeCommand" die Adresse übermittelt, an die das Übermitteln von von diesem Endpunkt ankommender Information gewünscht wird.

In einer weiteren Ausgestaltungsform eines erfindungsgemäßen Multimedia-Endgerätes kann außerdem vorgesehen sein, daß die Steuerung für die Punkt-zu-Multipunkt-Signalisierung zum Schließen und zum erneuten Öffnen logischer Kanäle gemäß dem Standard ITU-T H.323V2, Klausel 8.4.6 "Third Party Initiated Pause and Re-Routing", die Meldung "TerminalCapabilitySet = 0" verwenden. Mit der Meldung TerminalCapabilitySet teilt üblicherweise ein Endgerät einem anderen Endgerät mit, welche Kommunikationsmöglichkeiten es zur Verfügung hat. Die Grenzen dieser Möglichkeiten können hierbei sowohl technisch - aufgrund nicht vorhandener Hardware oder Software - oder durch festgelegte Berechtigungen bestimmt werden. Um eine bestehende Nutzdatenverbindung zwischen zwei Endgeräten auszulösen, kann die Steuerung beispielsweise jedem dieser Endgeräte eine TerminalCapabilitySet Meldung senden, die besagt, daß das jeweilige andere Endgerät keine Kommunikationsmöglichkeiten zur Verfügung hat. Die beiden Endgeräte erkennen diese Meldungen jeweils als von dem anderen Endgerät abgesandte Meldung. Da jedes dieser Endgeräte davon unterrichtet worden ist, daß das Endgerät, zu dem logische Kanäle geöffnet sind, keine Kommunikationsmöglichkeiten zur Verfügung hat, werden diese logischen Kanäle abgebaut.

Die Einrichtung zum Mischen von von den an der Multipunkt-Verbindung beteiligten Endgeräten stammenden Datenströmen und zum Bereitstellen von Datenstromgemischen an diese Endgeräte ermöglicht das Einrichten einer Konferenzschaltung auf der Grundlage mehrerer Punkt-zu-Punkt-Verbindungen zwischen einem erfindungsgemäßen Multimedia-Endgerät und anderen Endgeräten. Die übrigen Endgeräte benötigen hierbei keine besondere Multipunkt-Funktionalität oder Multitask-Funktionalität.

Nachstehend wird die Erfindung anhand eines Beispiels unter Bezugnahme auf die Figuren näher erläutert.
Figur 1 zeigt ein Ausführungsbeispiel eines erfindungsgemäßen Multimedia-Endgeräts in schematischer Blockdarstellung eines erweiterten Protokoll-Schichtmodells (Protocol Stack).
Figur 2 zeigt einen Meldungsflußplan für den Aufbau einer ITU-T H.450 ad-hoc-Konferenz zwischen drei Teilnehmern A, B und C, wobei der Teilnehmer A ein erfindungsgemäßes Multimedia-Endgerät verwendet.

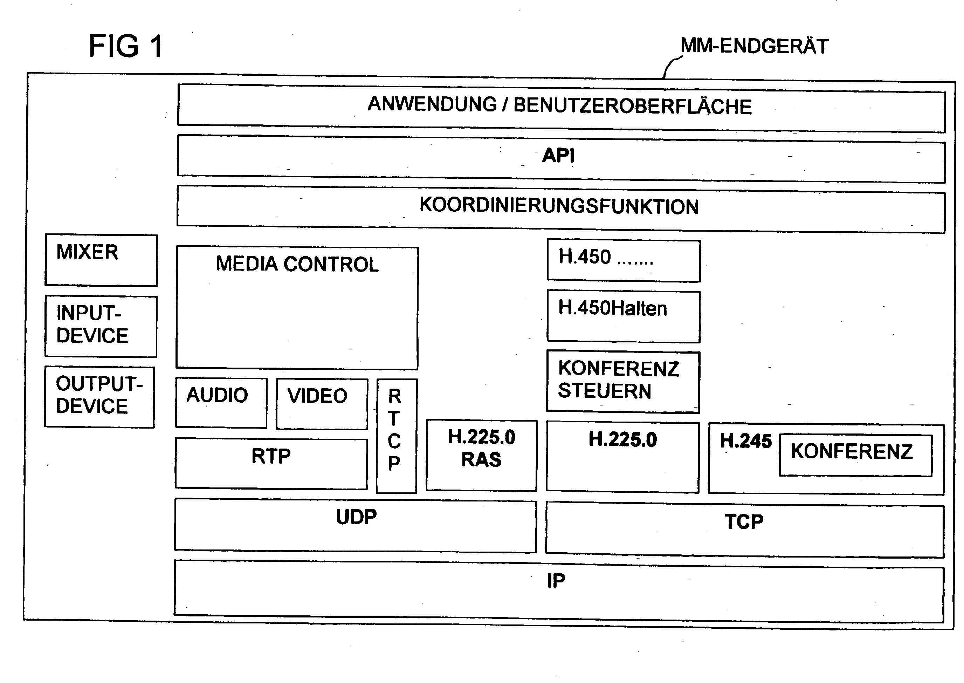

In Figur 1 ist ein Ausführungsbeispiel eines erfindungsgemäßes Multimedia-Endgeräts MM-Endgerät in schematischer Blockdarstellung in Form seines erweiterten Protokoll-Schichtmodells dargestellt. Wie in Netzen gemäß ITU-T H.323 üblich, basiert die Kommunikation des Endgeräts MM-Endgerät auf dem Internetprotokoll IP. Aufbauend auf dem Internetprotokoll IP ist in Figur 1 auf der rechten Seite der Protokollstapel der die Rufsteuerung behandelnden Signalisierung dargestellt.

Hier ist aufbauend auf dem Internetprotokoll IP und dem Signalisierungsprotokoll TCP ein Funktionsmodul H.225.0 gemäß dem Protokoll ITU-T H.225.0 für die Signalisierung der Basisrufsteuerung in H.323-Netzen vorgesehen. Beispielhafte Meldungen dieses Funktionsmoduls H.225.0 sind SETUP oder CONNECT.

Außerdem aufbauend auf dem Signalisierungsprotokoll TCP ist ein Funktionsmodul H.245 gemäß dem Steuerprotokoll ITU-T H.245 vorgesehen. Dieses Funktionsmodul H.245 dient unter anderem zum Austauschen von TerminalCapability Meldungen, also zum Abgeben und Empfangen von Information bezüglich Endgerätefähigkeiten. Außerdem dient dieses Funktionsmodul H.245 dem Festlegen von Aufgabenverteilungen wie Master- bzw. Slave-Funktionen und zum Öffnen und Schließen von zur Nutzdatenübertragung dienenden logischen Kanälen. Das Funktionsmodul H.245 ist auch für Meldungen wie MultipointConference, CommunicationModeCommand oder EnableDecentralizedConference in einem Netz gemäß ITU-T H.323 zuständig, die für oben beschriebene, bekannte Verfahren zur Realisieren einer Multipunkt-Konferenz erforderlich sind und optional in einem erfindungsgemäßen Multimedia-Endgerät eingesetzt werden können.

Auf dem Funktionsmodul H.225.0 setzen Funktionsmodule zusätzlicher Leistungsmerkmalsteuerungen auf wie zum Beispiel das erfindungsgemäß neue Funktionsmodul KONFERENZ STEUERN, das einer Steuerung zum Abarbeiten einer Signalisierung für Punkt-zu-Multipunkt-Verbindungen im Sinne der vorliegenden Erfindung entspricht. Als weitere Funktionsmodule zusätzlicher Leistungsmerkmalsteuerungen sind beispielhaft ein Funktionsmodul H.450 HALTEN zum Realisieren einer HALTEN-Funktion gemäß ITU-T H.450 und ein weiteres Funktionsmodul H.450 mit weiteren durch Punkte angeordneten Varianten nach dem Standard ITU-T H.450 in Figur 1 dargestellt.

In der Figur 1 links neben dem soeben beschriebenen Signalisierungsstapel ist ein Nutzdatenstapel dargestellt. Auch dieser basiert auf dem Internetprotokoll IP, auf dem UDP und darauf wiederum ein Echtzeitprotokoll RTP (vom englischsprachigen Ausdruck Real Time Protokoll)aufgesetzt ist. Neben dem Echtzeitprotokoll RTP sind noch ein Echtzeitsteuerprotokoll RTCP und der die Bereiche Registrierung, Administration und Status betreffende Teil H.225.0 RAS des Steuerprotokolls gemäß ITU-T H.225.0 auf dem Protokoll UDP abgestützt.

Auf dem Echtzeitprotokoll RTP aufbauend sind Codecs oder zumindest Decoder für Audio und Video vorgesehen, die in der Figur 1 mit AUDIO, VIDEO bezeichnet sind. Solche Audiocodecs AUDIO sind beispielsweise gemäß einem der Standards ITU-T G.711, ITU-T G.723.1, ITU-T G.728 ausgelegt. Auch ISO MPEG4 definiert Audiodecoder AUDIO. ISO MPEG4 definiert auch entsprechende Video-Decoder VIDEO. Bei der Verwendung von Decodern gemäß ISO MPEG4 sind gegebenenfalls proprietäre Coder in einem erfindungsgemäßen Multimedia-Endgerät MM-ENDGERÄT enthalten.

Das Echtzeitsteuerprotokoll RTCP und die Codecs bzw. Decoder für Audio und Video AUDIO, VIDEO werden von einer Mediensteuerung MEDIA CONTROL gesteuert, die unter anderem für das Zusammenspiel von im Multimedia-Endgerät MM-ENDGERÄT vorgesehenen Media-Eingabemitteln INPUT-DEVICE und Media-Ausgabemitteln OUTPUT-DEVICE zuständig ist. Media-Eingabemittel INPUT-DEVICE sind hierbei beispielsweise (in Figur 1 nicht explizit dargestellt) Kameras für Videodaten, Mikrophone für Audiodaten oder Schnittstellen zu nicht im Multimedia-Endgerät MM-ENDGERÄT enthaltenen Datenquellen. Ausgabemittel OUTPUT-DEVICE sind hierbei beispielsweise (in Figur 1 nicht explizit dargestellt) ein Bildschirm für Videodaten, Lautsprecher für Audiodaten oder Schnittstellen zu nicht im Multimedia-Endgerät MM-ENDGERÄT enthaltenen Ausgabemitteln wie Drucker oder Massenspeicher.

Die Mediensteuerung MEDIA CONTROL steuert auch eine Einrichtung zum Mischen von von an einer Multipunktverbindung beteiligten Endgeräten stammenden Datenströmen und zum Bereitstellen von Datenstromgemischen an diese Endgeräte. Eine solche Mischeinrichtung, deren Funktionsweise weiter oben beschrieben wurde, ist in Figur 1 mit dem Bezugszeichen MIXER gekennzeichnet.

Der beschriebene Stapel für die Nutzdatenbehandlung RTP, RTCP, H.225.0, AUDIO, VIDEO und MEDIA CONTROL und der beschriebene Stapel für die Signalisierungsbehandlung H.245, H.225.0, KONFERENZ STEUERN, H.450Halten, H.450 sind über eine Koordinierungsfunktion KOORDINIERUNGSFUNKTION an eine Anwendungsprogramm-Schnittstelle API gekoppelt. Die Koordinierungsfunktion KOORDINIERUNGSFUNKTION koordiniert hierbei das Zusammenspiel der Einheiten dieser Stapel mit der Anwendungsprogramm-Schnittstelle API (API steht für den englischsprachigen Ausdruck Application Programming Interface). Beispiele für eine Anwendungsprogramm-Schnittstelle API sind TAPI oder CAPI. Die Anwendungsprogramm-Schnittstelle API vermittelt zwischen Anwendungsprogrammen bzw. einer Benutzeroberfläche und der Koordinierungsfunktion KOORDINIERUNGSFUNKTION.

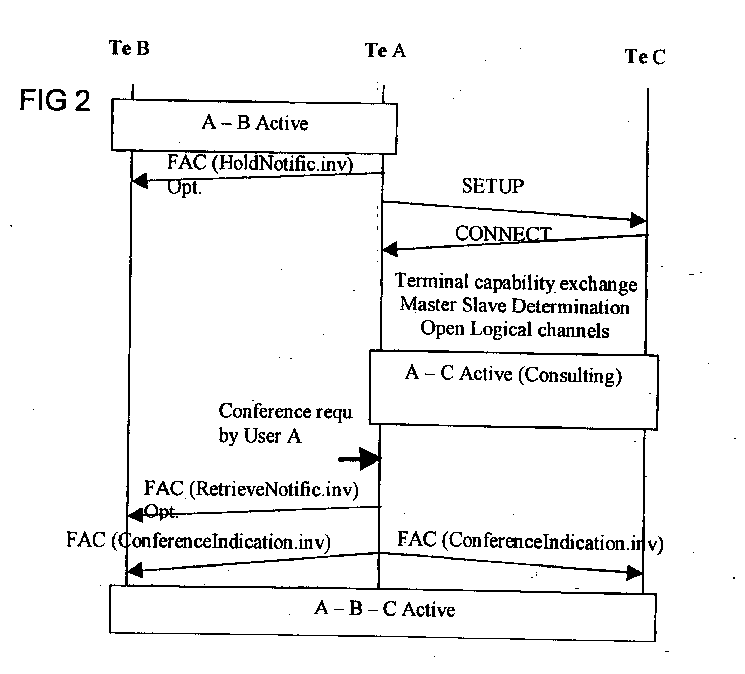

In dem in Figur 2 gezeigten Ausgangszustand besteht eine aktive Verbindung zwischen den Endgeräten TeA und TeB zweier Teilnehmer A und B. Hierbei ist mindestens das Endgerät TeA in dem Maße ein Multimedia-Engerät MM-ENDGERÄT gemäß Figur 1, daß ein Funktionsmodul KONFERENZ STEUERN vorgesehen ist als Steuerung zum Abarbeiten einer Signalisierung für Punkt-zu-Multipunkt-Verbindungen und eine Einrichtung MIXER zum Mischen von Datenströmen, die von an einer Multipunktverbindung beteiligten Endgeräten stammen.

Der Teilnehmer A setzt vom Endgerät TeA eine Setup-Meldung gemäß ITU-T H.323 zu einem Endgerät TeC eines Teilnehmers C ab. Optional kann hierbei, wie in der Figur 2 dargestellt, vom Endgerät TeA des Teilnehmers A eine Leistungsmerkmalmeldung FAC(HoldNotification.inv) zum Endgerät TeB des Teilnehmers B gesandt werden, um das Endgerät TeB in den Zustand "Halten" zu versetzen.

Das Endgerät TeC bestätigt mit einer Connect-Meldung zum Endgerät TeA die zuvor von diesem empfangene Setup-Meldung. Daraufhin wird zwischen den Endgeräten TeA und TeC eine Konsultationsverbindung in Form logischer Kanäle aufgebaut. Wenn der Teilnehmer A vom Endgerät TeA zu diesem Zeitpunkt eine Konferenzschaltung wünscht, übermittelt das Endgerät TeA an die Endgeräte TeB und TeC jeweils eine Leistungsmerkmalmeldung FAC(ConverenceIndication.inv), um anzuzeigen, daß eine Konferenzanordnung aufgerufen wird. Falls das Endgerät TeA vor Absenden einer Setup-Meldung zum Endgerät TeC eine Meldung FAC(HoldNotific.inv) zum Endgerät TeB gesandt hatte, kann das Endgerät TeB durch eine vom Endgerät TeA empfangene Meldung FAC (RetrieveNotific.inv) aus dem Zustand "Halten" wieder in einen Aktivzustand zurückversetzt werden. Die logischen Kanäle zwischen den Endgeräten TeA, TeB und Te, die bereits vor dem Einleiten der Konferenz geöffnet waren, werden weiterhin verwendet.

## Patentansprüche

1. Multimedia-Endgerät (TeA, MM-ENDGERÄT) für Telefonie gemäß dem Standard ITU-T H.323 zum Realisieren einer Multipunktverbindung zu einem ersten anderen Endgerät (TeB) und einem zweiten anderen Endgerät (TeC) ausgehend von einer aktiven Verbindung zu dem ersten Endgerät (TeB), mit
- einer Steuerung (KONFERENZ STEUERN) zum Abarbeiten einer Signalisierung für Punkt-zu-Multipunkt-Verbindungen und
- einer Mischeinrichtung (MIXER) zum Mischen von vom Multimedia-Endgerät und von den anderen an der Multimediaverbindung beteiligten Endgeräten (TeB, TeC) stammenden Datenströmen sowie zum Bereitstellen eines daraus resultierenden Gemisches aus diesen Datenströmen an diese Endgeräte (TeA, TeB, TeC),
wobei das Multimedia-Endgerät (TeA, MM-ENDGERÄT) ausgestaltet ist zum
- Versetzen des ersten Endgerätes (TeB) in einen Haltezustand,
- Aufbauen einer Konsultationsverbindung zu dem zweiten Endgerät (TeC) in Form logischer Kanäle und
- Zurückversetzen des ersten Endgerätes (TeB) in den Aktivzustand und Weiterverwenden der bereits geöffneten logischen Kanäle.

## Claims

1. Multimedia terminal (TeA, MM-ENDGERÄT) for telephony according to standard ITU-T H.323 for enabling a multipoint connection to a first other terminal (TeB) and a second other terminal (TeC) starting from an active connection to the first terminal (TeB), with
- a controller (KONFERENZ STEUERN) for processing a signalling for point-to-multipoint connections, and
- a mixer device (MIXER) for mixing data flows originating from the multimedia terminal and from the other terminals (TeB, TeC) participating in the multimedia connection and for providing a resulting mixture of these data flows to these terminals (TeA, TeB, TeC),
wherein the multimedia terminal (TeA, MM-ENDGERÄT) is configured for
- setting the first terminal (TeB) in a holding state,
- creating a consultation connection to the second terminal (TeC) in the form of logic channels, and
- resetting the first terminal (TeB) into active state and re-using the logic channels already opened.

## Revendications

1. Terminal multimédia (TeA, TERMINAL MM) pour la téléphonie selon la norme ITU-T H.323 pour la réalisation d'une liaison multipoints avec un premier autre terminal (TeB) et un second autre terminal (TeC) à partir d'une liaison active avec le premier terminal (TeB), avec
- une commande (COMMANDER CONFERENCE) destinée à exécuter une signalisation pour des liaisons points à multipoints et
- un dispositif de mélange (MELANGEUR) destiné à mélanger les flux de données provenant du terminal multimédia et des autres terminaux (TeB, TeC) participant à la liaison multimédia ainsi qu'à mettre à disposition un mélange en résultant de ces flux de données sur ces terminaux (TeA, TeB, TeC),
le terminal multimédia (TeA, TERMINAL MM) étant configuré pour
- amener le premier terminal (TeB) dans un état d'arrêt,
- établir une liaison de consultation avec le second terminal (TeC) sous la forme de canaux logiques et
- ramener le premier terminal (TeB) à l'état actif et poursuivre l'utilisation des canaux logiques déjà ouverts.
